# EUROPEAN PATENT APPLICATION

(11) **EP 4 668 470 A1**
(43) Date of publication of application: **24.12.2025**
(21) Application number: 23955697.0
(22) Date of filing: 18.10.2023
(51) Int. Cl.: H01M 50/59, H01M 50/593, H01M 50/531, H01M 50/147, H01M 50/547, H01M 50/188, H01M 10/0525, H01M 10/04

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); LEI, Yuyong, Ningde, Fujian 352100 (CN); GUO, Zhijun, Ningde, Fujian 352100 (CN)
(74) Representative: Lorenz Seidler Gossel Part. mbB
(86) International application number: PCT/CN2023/125165
(87) International publication number: WO 2025/081370

(57) **Abstract**

A battery cell, a battery, and an electrical apparatus. The battery cell comprises an electrode assembly, a shell, an electrode terminal, an insulating member, and a protective member. The shell comprises a wall portion provided with an electrode lead-out hole. The electrode assembly is accommodated in the shell and comprises a tab. The electrode terminal is electrically connected to the tab. The electrode terminal comprises a terminal body passing through the electrode lead-out hole and a fixing portion connected to the terminal body. The insulating member is arranged surrounding the terminal body. At least a portion of the insulating member is located between the fixing portion and the wall portion to isolate, in an insulated manner, the fixing portion from the wall portion. The protective member is arranged surrounding the terminal body and in contact with the insulating member. A tensile strength of the protective member is greater than a tensile strength of the insulating member.

## Description

### TECHNICAL FIELD

The present application relates to the technical field of batteries and more specifically relates to a battery cell, a battery, and an electrical apparatus.

### BACKGROUND

Battery cells are widely used in electronic devices such as mobile phones, laptops, battery vehicles, electric vehicles, electric airplanes, electric ships, electric toy cars, electric toy ships, electric toy airplanes and electric tools.

In the development of battery technology, how to improve the reliability of a battery cell is a research direction in battery technology.

### SUMMARY

The present application provides a battery cell, a battery, and an electrical apparatus, aiming to improve the reliability of the battery cell.

In a first aspect, an embodiment of the present application provides a battery cell, comprising an electrode assembly, a shell, an electrode terminal, an insulating member, and a protective member. The shell comprises a wall portion provided with an electrode lead-out hole. The electrode assembly is accommodated in the shell and comprises a tab. The electrode terminal is electrically connected to the tab. The electrode terminal comprises a terminal body passing through the electrode lead-out hole and a fixing portion connected to the terminal body. The insulating member is arranged surrounding the terminal body. At least a portion of the insulating member is located between the fixing portion and the wall portion to isolate, in an insulated manner, the fixing portion from the wall portion. The protective member is arranged surrounding the terminal body and in contact with the insulating member. A tensile strength of the protective member is greater than a tensile strength of the insulating member.

The protective member surrounds the periphery of the terminal body. During the production or use of the battery cell, the protective member can limit the deformation degree and movement range of the terminal body in its own radial direction, thereby reducing the deformation of the insulating member under the action force of the terminal body and reducing the risk of cracking of the insulating member, thus improving the reliability of the battery cell. The protective member has a higher tensile strength than the insulating member, so that the protective member is less prone to deformation or cracking when subjected to the action force of the terminal body, thereby reducing the risk of failure of the protective member, thus improving the reliability of the battery cell.

In some embodiments, the tensile strength of the protective member is greater than a tensile strength of the electrode terminal. The protective member can restrain the terminal body and reduce the deformation of the terminal body.

In some embodiments, the material of the protective member comprises metal or ceramic. The metal and ceramic have higher tensile strengths, which can improve the reliability of the protective member and reduce the risk of cracking of the protective member.

In some embodiments, the protective member is provided with a first through hole. The insulating member is provided with a second through hole. The terminal body passes through the first through hole, the second through hole, and the electrode lead-out hole. By providing the first through hole and the second through hole, it is convenient for the terminal body to pass through the protective member and the insulating member.

In some embodiments, along a radial direction of the electrode lead-out hole, a portion of the protective member protrudes inward from a hole wall of the second through hole. The portion of the protective member protrudes inward from the hole wall of the second through hole, so that the deformation or movement of the terminal body can be limited, thus reducing the risk of the terminal body directly squeezing the hole wall of the second through hole, reducing the stretching of the insulating member in the radial direction of the electrode lead-out hole, and reducing the risk of cracking of the insulating member, thus improving the reliability of the battery cell.

In some embodiments, along the radial direction of the electrode lead-out hole, a portion of the protective member protrudes inward from the hole wall of the electrode lead-out hole. The portion of the protective member that protrudes inward from the hole wall of the electrode lead-out hole can limit the deformation or movement of the terminal body, thereby reducing the risk of the terminal body squeezing the wall portion and reducing the short-circuit risk to a certain extent, thus improving the reliability of the battery cell.

In some embodiments, the first through hole, the second through hole, and the electrode lead-out hole are coaxially arranged.

The first through hole, the second through hole, and the electrode lead-out hole are coaxially arranged, so that the terminal body can pass through the first through hole, the second through hole, and the electrode lead-out hole at the same time, thereby simplifying the structural requirements for the terminal body and reducing the difficulty of assembly.

In some embodiments, at least a portion of the hole wall of the first through hole abuts against the periphery of the terminal body.

When the battery cell is subjected to external impact, the shaking of the terminal body along the radial direction of the electrode lead-out hole is reduced. The hole wall of the first through hole directly abuts against the periphery of the terminal body, so that the deformation of the terminal body can be effectively limited.

In some embodiments, the portion of the protective member that protrudes from the hole wall of the second through hole is in a ring shape. The protective member can limit the terminal body integrally from the periphery, thus further reducing the risk of the terminal body directly squeezing the hole wall of the second through hole, reducing the stretching of the insulating member in the radial direction of the electrode lead-out hole, and reducing the risk of cracking of the insulating member, thus improving the reliability of the battery cell.

In some embodiments, in the thickness direction of the wall portion, the fixing portion at least partially overlaps with the wall portion, and at least a portion of the insulating member and at least a portion of the protective member are located between the wall portion and the fixing portion.

The fixing portion and the wall portion can clamp the insulating member and the protective member in the thickness direction, thereby improving the stability of the insulating member and the protective member. When the battery cell is subjected to external impact, the movement of the insulating member relative to the wall portion and the movement of the protective member relative to the wall portion are reduced, thus improving reliability.

In some embodiments, a width of a projection of the fixing portion on the insulating member along the thickness direction is greater than or equal to 0.5 mm, so that the fixing portion can effectively press the insulating member against the wall portion, thereby reducing the risk of the insulating member being offset along the electrode lead-out hole, thus improving reliability.

In some embodiments, the protective member comprises a first portion and a second portion connected to the first portion, the first portion is configured to overlap with the insulating member along the thickness direction, and along the radial direction of the electrode lead-out hole, the second portion protrudes inward from the hole wall of the second through hole.

The first portion is configured to overlap with the insulating member in the thickness direction, so that the wall portion and the fixing portion clamp the insulating member and the first portion in the thickness direction at the same time. The second portion can limit the deformation or movement of the terminal body, thus reducing the risk of the terminal body directly squeezing the hole wall of the second through hole, reducing the stretching of the insulating member in the radial direction of the electrode lead-out hole, and reducing the risk of cracking of the insulating member, thus improving the reliability of the battery cell.

In some embodiments, in the thickness direction, the projection of the second through hole is located within the projection of the electrode lead-out hole, so that the second portion protrudes inward from the hole wall of the electrode lead-out hole, thereby reducing the risk of the terminal body squeezing the wall portion and reducing the deformation of the wall portion, thus improving the reliability of the battery cell.

In some embodiments, the first portion is embedded into the insulating member. Embedding the first portion into the insulating member can maintain the relative positions of the insulating member and the protective member fixed during the assembly of the battery cell, so that the protective member can better limit the deformation of the electrode terminal during the assembly process, thereby better protecting the insulating member and reducing the risk of cracking of the insulating member.

In some embodiments, along the thickness direction, at least a portion of the first portion is located between the fixing portion and the insulating member. The fixing portion can squeeze the insulating member via the protective member, and the protective member can play a protective effect, thereby reducing the risk of the fixing portion causing pressure-induced damage to the insulating member, thus improving reliability.

In some embodiments, the insulating member comprises an insulating body and an insulating protrusion, the second through hole penetrates the insulating body along the thickness direction, at least a portion of the insulating body is located between the fixing portion and the wall portion, and the insulating protrusion protrudes from a surface of the insulating body away from the wall portion. At least a portion of the protective member is located between the fixing portion and the insulating body in the thickness direction and between the insulating protrusion and the terminal body in the radial direction of the second through hole.

During the assembly of the protective member, the insulating protrusion can limit the position of the protective member, thus simplifying the installation process of the protective member. During the production or use of the battery cell, the insulating protrusion can restrict the position of the protective member, thereby reducing the amount of offset of the protective member, thus improving the reliability of the protective member.

In some embodiments, the aperture of the second through hole is D1, the diameter of the first through hole is D2, and the outer diameter of the protective member is D3; the insulating protrusion is in a ring shape, and the inner diameter of the insulating protrusion is D4. D1, D2, D3, and D4 satisfy: D1-D2 > D4-D3.

D4-D3 is related to the amount of offset of the protective member in the radial direction, and the size of protrusion of the protective member inward from the hole wall of the second through hole in the radial direction is related to the value of D1-D2. In an embodiment of the present application, D4-D3 is defined as being smaller than D1-D2. Even if deviation occurs during the assembly of the protective member, it can still be ensured to a certain extent that the protective member protrudes inward from the hole wall of the second through hole in the radial direction, thereby enabling the protective member to limit the deformation degree and movement range of the terminal body in its own radial direction, reducing the risk of cracking of the insulating member, thus improving the reliability of the battery cell.

In some embodiments, the electrode terminal further comprises a position-limiting portion arranged surrounding the terminal body, and in the thickness direction of the wall portion, the position-limiting portion and the fixing portion are located on two sides of the wall portion, respectively. The position-limiting portion and the fixing portion can clamp the wall portion from the two sides, thereby achieving fixation of the electrode terminal and the wall portion.

In some embodiments, the fixing portion is located on the inner side of the wall portion; or, the fixing portion is located on the outer side of the wall portion.

In some embodiments, the fixing portion is configured to be formed by folding after the electrode terminal passes through the electrode lead-out hole.

When folding the electrode terminal, the material flows toward the folded portion, causing the periphery of the electrode terminal to expand; and the protective member can limit the flow of the material during the formation of the fixing portion, thereby reducing the radial expansion of the electrode terminal and reducing the risk of compression cracking of the insulating member during the shaping of the fixing portion, thus improving the reliability of the battery cell.

In some embodiments, the protective member is fixedly connected to the insulating member. During the assembly of the battery cell, the protective member and the insulating member can be supplied simultaneously, thereby omitting the positioning and installation process of the protective member, thus simplifying the assembly process and reducing costs.

In some embodiments, the protective member and the insulating member are formed by integral injection molding. The integral injection molding method can improve the fixing strength of the insulating member and the protective member.

In some embodiments, the shell comprises a shell body and an end cover. The shell body has an opening, and the end cover covers the opening. The shell body comprises a bottom wall arranged opposite to the end cover, and the wall portion is the bottom wall.

In a second aspect, an embodiment of the present application provide a battery, comprising a plurality of the battery cells provided by any embodiment of the first aspect.

In a third aspect, an embodiment of the present application provides an electrical apparatus, comprising the battery provided according to the second aspect. The battery is used for providing electric energy.

### BRIEF DESCRIPTION OF DRAWINGS

In order to illustrate the technical solutions of the embodiments of the present application more clearly, the drawings required in the embodiments of the present application are briefly introduced below. Apparently, the drawings described below are only some embodiments of the present application. For those of ordinary skill in the art, other drawings can also be obtained according to the drawings without involving any creative effort.
FIG. 1 is a schematic structural view of a vehicle provided in some embodiments of the present application;
FIG. 2 is an exploded schematic view of a battery provided by some embodiments of the present application;
FIG. 3 is a schematic structural view of a battery module shown in FIG. 2;
FIG. 4 is a schematic structural view of a battery cell provided by some embodiments of the present application;
FIG. 5 is an exploded schematic view of the battery cell shown in FIG. 4;
FIG. 6 is a schematic sectional view of a battery cell provided by some embodiments of the present application;
FIG. 7 is an enlarged schematic view of a round frame in FIG. 6;
FIG. 8 is an enlarged schematic view of a block in FIG. 7;
FIG. 9 is a schematic view of an insulating member and a protective member of a battery cell as provided by some embodiments of the present application;
FIG. 10 is an enlarged schematic view of a round frame in FIG. 9;
FIG. 11 is a schematic structural view of a battery cell provided by some embodiments of the present application before the fixing portion is formed;
FIG. 12 is a schematic local sectional view of a battery cell provided by some other embodiments of the present application;
FIG. 13 is an enlarged schematic view of a round frame in FIG. 12;
FIG. 14 is a schematic view of an insulating member and a protective member of a battery cell as provided by some embodiments of the present application;
FIG. 15 is a schematic local sectional view of a battery cell provided by some other embodiments of the present application; and
FIG. 16 is a schematic local sectional view of a battery cell provided by some other embodiments of the present application.

Reference numerals are as follows:
1. vehicle; 2. battery; 3. controller; 4. motor; 5. box; 5a. first box body part; 5b. second box body part; 5c. accommodating space; 6. battery module; 7. battery cell;
10. electrode assembly; 11. tab;
20. shell; 21. shell body; 211. bottom wall; 22. end cover; 23. wall portion; 231. electrode lead-out hole;
30. electrode terminal; 31. terminal body; 311. second recess; 312. third through hole; 32. fixing portion; 33. position-limiting portion; 34. third recess; 35. fifth recess;
40. insulating member; 41. second through hole; 42. insulating body; 43. insulating protrusion; 44. first recess; 45. fourth recess;
50. protective member; 51. first through hole; 52. first portion; 53. second portion;
60. sealing member; 70. sealing plate; 80. current collecting member; Z. thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments of the present application without involving any creative effort shall fall within the scope of protection of the present application.

Unless otherwise defined, all technical and scientific terms used in the present application shall have the same meanings as those generally understood by those skilled in the art of the present application. In the present application, the terms used in the specification of the present application are merely for the purpose of describing specific embodiments and are not intended to limit the present application. The terms "include" and "have" and any variations thereof in the specification and claims and the above Description of Drawings of the present application are intended to cover non-exclusive inclusion. The terms "first," "second," etc. in the specification and the claims of the present application as well as the above drawings are used to distinguish different objects, rather than describing a specific order or primary-secondary relationship.

The phrase "embodiment" referred to in the present application means that specific features, structures, or characteristics described with reference to embodiments are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection", and "attachment" should be understood in a broad sense, unless otherwise explicitly specified or defined, for example, it may be a fixed connection, a detachable connection, or an integrated connection; and may be a direct connection or an indirect connection via an intermediate medium, or may be communication between the interiors of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after the character are in an "or" relationship.

In the embodiments of the present application, like reference numeral denotes like component, and for the sake of brevity, detailed descriptions of the same components are omitted in different embodiments. It should be understood that the thickness, length, width and other dimensions of each component in the embodiments of the present application as shown in the drawings, as well as the overall thickness, length, width and other dimensions of an integrated apparatus, are for illustrative purposes only and should not constitute any limitation to the present application.

In the present application, the "plurality of" refers to not less than two (including two).

In the embodiments of the present application, the battery cell may be a secondary battery. The secondary battery refers to a battery cell that, after being discharged, can activate an active material by charging for continued use.

The battery cell can, include but is not limited to, a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc.

As an example, the battery cell may be a cylindrical battery cell, a prismatic battery cell, or a battery cell in another shape. The prismatic battery cell comprises a square-shell battery cell, a blade-shaped battery cell, and a polygonal prism battery. For example, the polygonal prism battery may be a hexagonal prism battery. The present application has no special limitation.

The battery mentioned in the embodiments of the present application refers to a single physical module comprising one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack comprises a box and a battery cell. The battery cell or the battery module is accommodated in the box.

In some embodiments, the box may act as a portion of a vehicle chassis structure. For example, a portion of the box may become at least a portion of a vehicle floor, or a portion of the box may become at least a portion of a cross beam and a longitudinal beam of a vehicle.

In some embodiments, the battery may be an energy storage apparatus. The energy storage apparatus comprises an energy storage container, an energy storage cabinet, etc.

The battery cell generally comprises an electrode assembly and a shell in which the electrode assembly is accommodated. The electrode assembly comprises a positive electrode, a negative electrode, and a separator. During the charging and discharging of the battery cell, active ions (such as lithium ions) are intercalated and deintercalated back and forth between the positive electrode and the negative electrode. The separator is arranged between the positive electrode and the negative electrode and can reduce the risk of short circuit between the positive electrode and the negative electrode, while allowing active ions to pass through.

The shell is used for packaging components such as the electrode assembly and the electrolyte. The shell may be a steel shell, an aluminum shell, a plastic shell (such as polypropylene), a composite metal shell (such as a copper-aluminum composite shell), an aluminum-plastic film, etc.

The battery cell is usually also provided with an electrode terminal mounted on the shell. The electrode terminal is used for being electrically connected to a tab of the electrode assembly to lead out the electric energy generated by the electrode assembly. In order to reduce the risk of short circuit, the electrode terminal is necessarily isolated from the shell in an insulated manner. The shell is usually provided with an insulating member, and at least a portion of the insulating member is located between the electrode terminal and the shell, so as to isolate, in an insulated manner, the electrode terminal from the shell.

During the production or use of the battery cell, the insulating member may be squeezed and stretched by the electrode terminal, causing cracking of the insulating member, leading to the risk of insulation failure and affecting the reliability of the battery cell.

In view of this, an embodiment of the present application provides a technical solution, in which a protective member with a greater tensile strength is arranged on the periphery of the electrode terminal to limit the deformation or movement of the electrode terminal, thereby reducing the deformation of the insulating member under the action of the electrode terminal and reducing the risk of cracking of the insulating member, thus improving the reliability of the battery cell.

The battery cell described in the embodiments of the present application is suitable for use in a battery and an electrical apparatus in which a battery is used.

The battery cell, the battery, and the electrical apparatus disclosed by the embodiments of the present application can be used in an electrical apparatus in which a battery is used as a power source or various energy storage systems in which a battery is used as an energy storage element. The electrical apparatus can be but not limited to mobile phones, tablet computers, laptops, electric toys, electric tools, battery vehicles, electric vehicles, ships, spacecrafts, etc. The electric toys can include fixed or mobile electric toys, such as a game machine, an electric vehicle toy, an electric ship toy, and an electric airplane toy, and the spacecraft can include an airplane, a rocket, a space shuttle, a spaceship, etc.

The following embodiments, for the sake of convenience, are illustrated by taking a vehicle as an electrical apparatus.

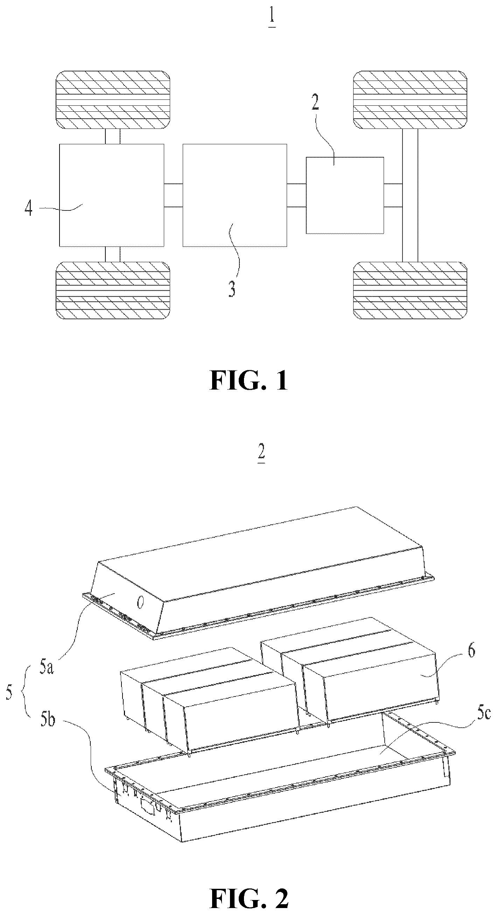

FIG. 1 is a schematic structural view of a vehicle provided in some embodiments of the present application.

As shown in FIG. 1, a battery 2 is provided inside the vehicle 1. The battery 2 may be arranged at the bottom, or head, or tail of the vehicle 1. The battery 2 may be used for supplying power to the vehicle 1. For example, the battery 2 may be used as an operating power source for the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as an operating power source for the vehicle 1, but also as a driving power source for the vehicle 1 to replace or partially replace fuel or natural gas to supply driving power to the vehicle 1.

FIG. 2 is an exploded schematic view of a battery provided by some embodiments of the present application. As shown in FIG. 2, the battery 2 comprises a box 5 and a battery cell (not shown in FIG. 2); and the battery cell is accommodated in the box 5.

The box 5 is used for accommodating the battery cell and the box 5 may have various structures. In some embodiments, the box 5 can comprise a first box body part 5a and a second box body part 5b. The first box body part 5a and the second box body part 5b cover each other. The first box body part 5a and the second box body part 5b jointly define an accommodating space 5c used for accommodating the battery cell. The second box body part 5b can have a hollow structure with one end open. The first box body part 5a has a plate-like structure, and the first box body part 5a covers the open side of the second box body part 5b to form the box 5 with the accommodating space 5c. Each of the first box body part 5a and the second box body part 5b can also have a hollow structure with one side open. The open side of the first box body part 5a covers the open side of the second box body part 5b to form the box 5 with the accommodating space 5c. Of course, the first box body part 5a and the second box body part 5b can be in various shapes, such as cylinders and cuboids.

In order to improve the sealing performance after the first box body part 5a and the second box body part 5b are connected, a sealing member such as a sealant and a sealing ring may also be arranged between the first box body part 5a and the second box body part 5b.

It is assumed that the first box body part 5a covers the top of the second box body part 5b, the first box body part 5a can also be referred to as an upper box cover, and the second box body part 5b can also be referred to as a lower box.

In the battery 2, there can be either one or more battery cells. If there are a plurality of battery cells, the plurality of battery cells can be connected in series, or in parallel, or in parallel-series connection. Parallel-series connection means that the plurality of battery cells are connected in both series and parallel. The plurality of battery cells can be directly connected in series, or in parallel, or in parallel-series connection, and the whole body formed by the plurality of battery cells is then accommodated in the box 5. Of course, the plurality of battery cells can also be connected in series, or in parallel, or in parallel-series connection in advance to form a battery module 6. A plurality of battery modules 6 are connected in series, or in parallel, or in parallel-series connection as a whole and are accommodated in the box 5.

The battery cell may be the minimum unit which forms the battery.

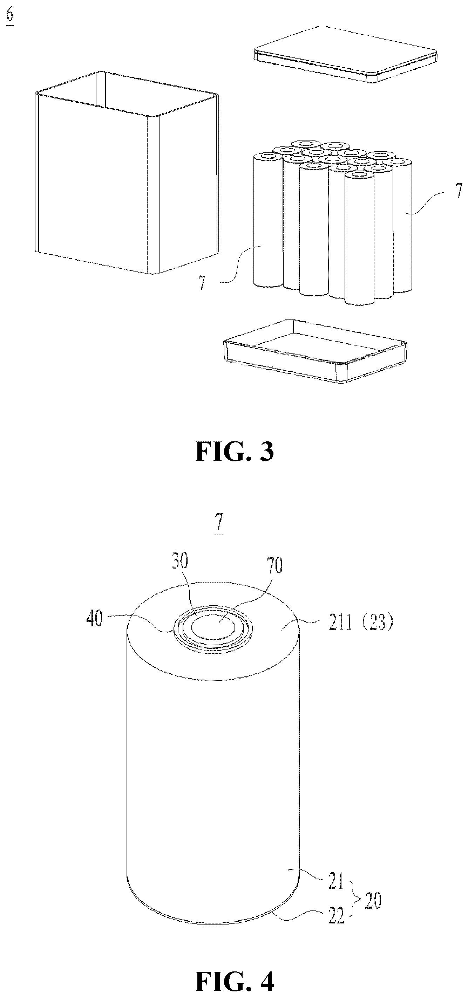

FIG. 3 is a schematic structural view of the battery module shown in FIG. 2.

In some embodiments, as shown in FIG. 3, there are a plurality of battery cells 7, and the plurality of battery cells 7 are connected in series, or in parallel, or in parallel-series connection in advance to form a battery module 6. A plurality of battery modules 6 are then connected in series, or in parallel, or in parallel-series connection as a whole and accommodated in the box.

The plurality of battery cells 7 in the battery module 6 can be electrically connected via a busbar component, so that the parallel, or series, or parallel-series connection of the plurality of battery cells 7 in the battery module 6 is realized. There may be one or more busbar components, and each of the busbar components is used for electrically connecting at least two battery cells.

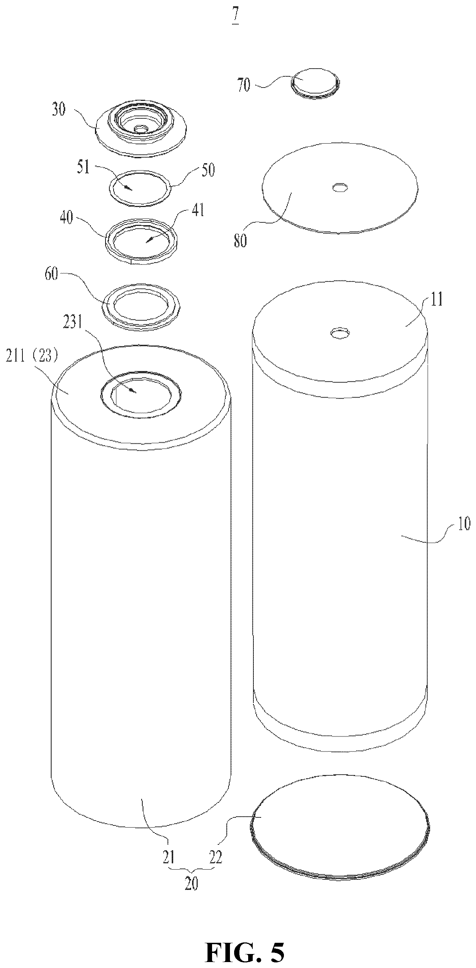

FIG. 4 is a schematic structural view of a battery cell provided by some embodiments of the present application. FIG. 5 is an exploded schematic view of the battery cell shown in FIG. 4.

As shown in FIGs. 4 and 5, in some embodiments, the battery cell 7 comprises an electrode assembly 10 and a shell 20, and the electrode assembly 10 is accommodated in the shell 20.

The electrode assembly 10 comprises a positive electrode and a negative electrode. During the charging and discharging of the battery cell 7, active ions (such as lithium ions) are intercalated and deintercalated back and forth between the positive electrode and the negative electrode. Optionally, the electrode assembly 10 further comprises a separator arranged between the positive electrode and the negative electrode. The separator can reduce a risk of short circuit between the positive electrode and the negative electrode, while allowing active ions to pass through.

In some embodiments, the positive electrode can be a positive electrode plate, and the positive electrode plate may comprise a positive electrode current collector and a positive electrode active material layer arranged on at least one surface of the positive electrode current collector.

For example, the positive electrode current collector has two surfaces opposite to each other in a thickness direction of the positive electrode current collector. The positive electrode active material layer is arranged on either or both of the two opposite surfaces of the positive electrode current collector.

As an example, the positive electrode current collector may be a metal foil or a composite current collector. For example, as the metal foil, stainless steel, copper, aluminum, nickel, a carbon electrode, carbon, nickel, titanium, aluminum or stainless steel treated with silver on the surface, etc., may be used. The composite current collector may comprise a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as substrates of polypropylene, polyethylene terephthalate, polybutylene terephthalate, polystyrene, or polyethylene).

As an example, the positive electrode active material layer comprises a positive electrode active material, and the positive electrode active material may include at least one of a lithium-containing phosphate, a lithium transition metal oxide, and respective modified compounds thereof. However, the present application is not limited to these materials, and other traditional materials that may be used for a positive electrode active material layer of a battery may also be used. These positive electrode active material layers may be used either alone or in combination of two or more thereof. The example of the lithium-containing phosphate may include but is not limited to at least one of a group consisting of lithium iron phosphate (such as LiFePO₄ (LFP for short)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂ and LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), modified compounds thereof, etc.

In some embodiments, a foam metal may be used as the positive electrode. The foam metal may be foam nickel, foam copper, foam aluminum, foam alloy, or foam carbon, etc. When a foam metal is used as the positive electrode, the surface of the foam metal may not be provided with a positive electrode active material layer, and certainly, may also be provided with a positive electrode active material layer. As an example, a lithium source material, a potassium metal, or a sodium metal may also be filled or/and deposited in the foam metal, and the lithium source material is a lithium metal and/or a lithium-rich material.

In some embodiments, the negative electrode may be a negative electrode plate, and the negative electrode plate may comprise a negative electrode current collector.

As an example, the negative electrode current collector may be a metal foil, a foam metal, or a composite current collector. For example, as the metal foil, aluminum or stainless steel treated with silver on the surface, copper, aluminum, nickel, a carbon electrode, carbon, titanium, etc. can be used. The foam metal may be foam nickel, foam copper, foam aluminum, foam alloy, or foam carbon, etc. The composite current collector may comprise a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as substrates of polypropylene, polyethylene terephthalate, polybutylene terephthalate, polystyrene, or polyethylene).

As an example, the negative electrode plate may comprise a negative electrode current collector and a negative electrode active material arranged on at least one surface of the negative electrode current collector.

As an example, the negative electrode current collector has two surfaces opposite in its own thickness direction, and the negative electrode active material is arranged on either one or both of the two opposite surfaces of the negative electrode current collector.

As an example, a negative electrode active material commonly known in the art for the battery cell 7 can be used as the negative active material. As an example, the negative electrode active material may comprise at least one of the following materials: artificial graphite, natural graphite, soft carbon, hard carbon, a silicon-based material, a tin-based material, lithium titanate, etc. The silicon-based material may be selected from at least one of elemental silicon, a silicon-oxygen compound, a silicon-carbon complex, a silicon-nitrogen complex, and a silicon alloy. The tin-based material may be selected from at least one of elemental tin, a tin-oxygen compound, and a tin alloy. However, the present application is not limited to these materials, and other traditional materials that can be used as negative electrode active materials for batteries can also be used. These negative electrode active materials may be used either alone or in combination of two or more thereof.

In some embodiments, the material of the positive electrode current collector can be aluminum, and the material of the negative electrode current collector can be copper.

In some embodiments, the separator comprises a separator film. The type of the separator film is not particularly limited in the present application, and any well-known separator film having good chemical stability, mechanical stability, and a porous structure can be selected.

As an example, the main material of the separator film can be selected from at least one of glass fibers, nonwoven fabric, polyethylene, polypropylene, polyvinylidene fluoride, and ceramic. The separator film can be either a single-layer thin film or a multi-layer composite thin film without special limitations. When the separator film is a multi-layer composite thin film, the material in each layer may be same or different, which is not particularly limited. The separator can be an independent component positioned between the positive electrode and the negative electrode, or can also be attached to the surfaces of the positive electrode and the negative electrode.

In some embodiments, the separator is a solid electrolyte. The solid electrolyte is arranged between the positive electrode and the negative electrode and functions to transport ions and isolate the positive electrode from the negative electrode.

In some embodiments, the battery cell 7 further comprises an electrolyte, and the electrolyte functions to conduct ions between the positive electrode and the negative electrode. The type of the electrolyte is not particularly limited in the present application and can be selected according to requirements. The electrolyte may be in a liquid state, a gel state, or a solid state.

A liquid electrolyte comprises an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent can be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfolane, ethyl methyl sulfone and diethyl sulfone. The solvent may also be selected from ether solvents. The ether solvent may include one or more of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, cellulose, etc.

As an example, the inorganic solid electrolyte may be one or more of an oxide solid electrolyte (crystalline perovskite, a sodium superionic conductor, garnet, and an amorphous LiPON thin film), a sulfide solid electrolyte (a crystalline lithium superionic conductor (lithium germanium phosphorus sulfur and argyrodite) and amorphous sulfide), a halide solid electrolyte, a nitride solid electrolyte, and a hydride solid electrolyte.

As an example, a composite solid electrolyte is formed by adding an inorganic solid electrolyte filler to a polymer solid electrolyte.

In some embodiments, the electrode assembly 10 has a wound structure. The positive electrode plate and the negative electrode plate are wound into the wound structure.

In some embodiments, the electrode assembly 10 has a stacked structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments. One positive electrode plate is clamped between adjacent folded segments.

As an example, both the positive electrode plate and the negative electrode plate are folded to form a plurality of stacked folded segments.

As an example, a plurality of separators may be provided, which are separately arranged between any adjacent positive electrode plates or negative electrode plates.

As an example, the separator can be continuously arranged between any adjacent positive electrode plates or negative electrode plates by folding or winding.

In some embodiments, the shape of the electrode assembly 10 can be cylindrical, flat, or polygonal prism-shaped.

In some embodiments, the electrode assembly 10 is provided with a tab 11. The tab 11 can lead out a current from the electrode assembly 10. The tab 11 comprises a positive tab and a negative tab.

In some embodiments, the shell 20 comprises a shell body 21 and an end cover 22. The shell body 21 has an opening, and the end cover 22 is used for covering the opening.

The shell body 21 is a component used for matching with the end cover 22 to form an internal cavity of the battery cell 7, and the formed internal cavity can be used for accommodating the electrode assembly 10, the electrolyte, and other components.

The shell body 21 and the end cover 22 can be independent components. By way of example, an opening can be formed on the shell body 21, and at the opening, the end cover 22 covers the opening to form the internal cavity of the battery cell 7.

The shell body 21 can be have various shapes and various sizes, such as a cuboid shape, a cylinder shape, and a hexagonal prism shape. Specifically, the shape of the shell body 21 can be determined based on the specific shape and size of the electrode assembly 10. The shell body 21 may also be made of a variety of materials. For example, the material of the shell body 21 includes but is not limited to copper, iron, aluminum, stainless steel, aluminum alloy, etc.

The shape of the end cover 22 can be adapted to the shape of the shell body 21 for matching with the shell body 21. The material of the end cover 22 can be either the same as or different from the material of the shell body 21. Optionally, the end cover 22 can be made of a material with certain hardness and strength (such as copper, iron, aluminum, stainless steel, aluminum alloy, and plastic), and therefore, the end cover 22 is less prone to deformation when being squeezed and collided, the battery cell 7 can have a higher structural strength, and the reliability can also be improved.

The end cover 22 is connected to the shell body 21 by welding, bonding, snap fit, or other means.

Either one or both ends of the shell body 21 can be opened. In some examples, the shell body 21 can have a structure with one side open, and one end cover 22 is provided and covers the shell body 21. In some other examples, the shell body 21 may also have a structure with both sides open, and two end covers 22 are provided and the two end covers 22 respectively cover the two openings of the shell body 21.

In some embodiments, the battery cell 7 comprises an electrode terminal 30. The electrode terminal 30 is electrically connected to the tab 11 to output or input the electric energy of the battery cell 7.

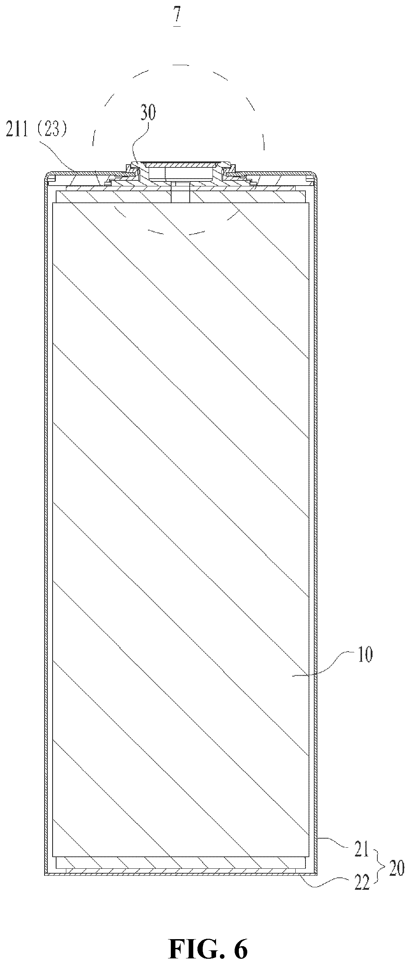

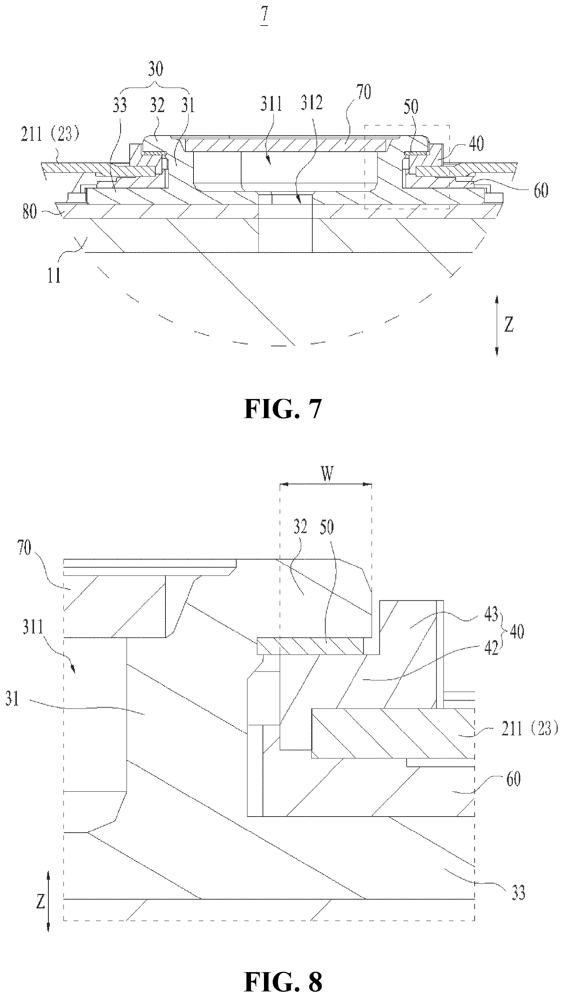

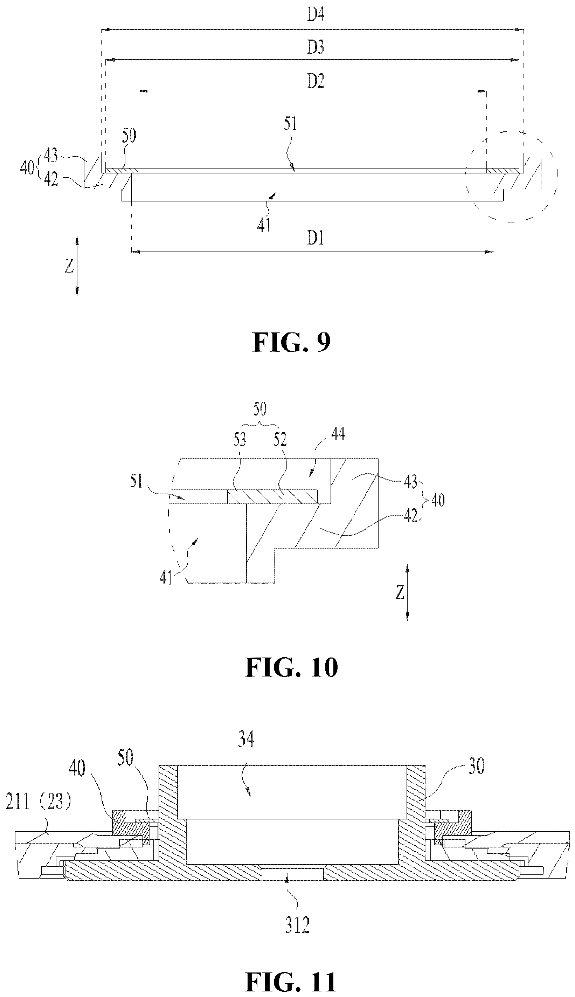

FIG. 6 is a schematic sectional view of a battery cell provided by some embodiments of the present application; FIG. 7 is an enlarged schematic view of a round frame in FIG. 6; FIG. 8 is an enlarged schematic view of a block in FIG. 7; FIG. 9 is a schematic view of an insulating member and a protective member of a battery cell as provided by some embodiments of the present application; and FIG. 10 is an enlarged schematic view of a round frame in FIG. 9.

With reference to FIGs. 5 to 10, in some embodiments, the battery cell 7 comprises an electrode assembly 10, a shell 20, an electrode terminal 30, an insulating member 40, and a protective member 50. The shell 20 comprises a wall portion 23. The wall portion 23 is provided with an electrode lead-out hole 231. The electrode assembly 10 is accommodated in the shell 20, and the electrode assembly 10 comprises a tab 11. The electrode terminal 30 is electrically connected to the tab 11. The electrode terminal 30 comprises a terminal body 31 passing through the electrode lead-out hole 231 and a fixing portion 32 connected to the terminal body 31. The insulating member 40 is arranged surrounding the terminal body 31. At least a portion of the insulating member 40 is located between the fixing portion 32 and the wall portion 23 to isolate, in an insulated manner, the fixing portion 32 and the wall portion 23. The protective member 50 is arranged surrounding the terminal body 31 and in contact with the insulating member 40. The tensile strength of the protective member 50 is greater than the tensile strength of the insulating member 40.

One or more electrode assemblies 10 may be contained in the shell 20.

As an example, the electrode assembly 10 comprises a positive electrode plate and a negative electrode plate. The positive electrode plate comprises a positive electrode coating region coated with a positive electrode active material layer and a positive electrode non-coating region not coated with a positive electrode active material layer. The negative electrode plate comprises a negative electrode coating region coated with a negative electrode active material layer and a negative electrode non-coating region not coated with a negative electrode active material layer. The positive electrode non-coating region of the positive electrode plate constitutes a positive tab, and the negative electrode non-coating region of the negative electrode plate constitutes a negative tab. During the charging and discharging of the battery cell 7, the positive electrode active material layer and the negative electrode active material layer react with the electrolyte.

The tab 11 electrically connected to the electrode terminal 30 can be either a positive tab or a negative tab.

The tab 11 can be directly connected to the electrode terminal 30. For example, the tab is connected to the electrode terminal 30 by welding, abutting, or other means. Alternatively, the tab 11 can be indirectly connected to the electrode terminal 30 via other conductive components (such as a current collecting member 80), so that the tab 11 can be electrically connected to the electrode terminal 30.

As an example, the wall portion 23 can be either an end cover 22 or one wall of the shell body 21.

As an example, the wall portion 23 can be circular, rectangular, elliptical, or in other shapes.

As an example, the electrode lead-out hole 231 penetrates through the wall portion 23, so that the electrode terminal 30 conveniently leads out electric energy from the electrode assembly 10 to the outside of the shell 20. Optionally, the electrode lead-out hole 231 penetrates through the wall portion 23 in the thickness direction Z of the wall portion 23.

By way of example, the terminal body 31 can pass through the electrode lead-out hole 231, so as to realize connection of the electrode terminal 30 to the busbar component located outside the battery cell 7.

By way of example, a projection of the terminal body 31 along the thickness direction Z is located within a projection of the electrode lead-out hole 231 along the thickness direction Z.

There may be either one or more fixing portions 32.

In some examples, there may be one fixing portion 32, and the fixing portion 32 is arranged surrounding the terminal body 31. In some other examples, there may be a plurality of fixing portions 32, and the plurality of fixing portions 32 are arranged at intervals along the circumference of the terminal body 31.

The insulating member 40 is arranged surrounding the terminal body 31. As an example, the insulating member 40 may be sleeved on the terminal body 31, and the insulating member 40 may or may not be in contact with the terminal body 31.

The insulating member 40 may be either entirely arranged between the fixing portion 32 and the wall portion 23, or only partially arranged between the fixing portion 32 and the wall portion 23. The insulating member 40 may be in direct contact with the fixing portion 32, or may also be isolated from the fixing portion by other components, e.g., by the protective member 50. The insulating member 40 may be in direct contact with the wall portion 23, or may also be isolated by other components, e.g., by the protective member 50.

The insulating member 40 can at least isolate, in an insulated manner, the fixing portion 32 from the wall portion 23. Optionally, the insulating member 40 may also isolate, in an insulated manner, at least a portion of the terminal body 31 from the wall portion 23 .

The protective member 50 is sleeved on the terminal body 31 and may or may not be in contact with the terminal body 31.

The protective member 50 and the insulating member 40 are in contact with each other. The two may be either simply in contact or be in contact and directly fixedly connected.

Tensile strength reflects the fracture resistance of a material. The ability of a material or specimen to resist fracture when subjected to static tension or the maximum tensile force (tensile stress) that a material can withstand without breaking.

By way of example, the tensile strength of the protective member 50 can be tested according to a method involving: cutting a piece of specimen from the protective member 50 and measuring the cross-sectional area S of the specimen; fixing both ends of the specimen on a tensile tester; starting the tensile tester, applying load at a constant rate, and recording the maximum load F of the specimen at shear rupture; and calculating F/S, that is, the tensile strength of the protective member 50 can be measured. For detailed steps, reference can be made to the national standard GB/T 228-2002 "Metallic materials - Tensile testing at ambient temperature".

Similarly, the tensile strength of the insulating member 40 may also be tested according to the above method.

The tensile strength of the protective member 50 may be greater than, equal to, or less than the tensile strength of the electrode terminal 30.

In the thickness direction Z of the wall portion 23, the projection of the fixing portion 32 may or may not overlap with the projection of the wall portion 23. By way of example, the fixing portion 32 may be located either on the inner side of the wall portion 23 or on the outer side of the wall portion 23.

In an embodiment of the present application, the protective member 50 is arranged surrounding the periphery of the terminal body 31. During the production or use of the battery cell 7, the protective member 50 can limit the deformation degree and movement range of the terminal body 31 in its own radial direction, thereby reducing the deformation of the insulating member 40 under the action force of the terminal body 31, reducing the risk of cracking of the insulating member 40, and improving the reliability of the battery cell 7. The protective member 50 has a higher tensile strength than the insulating member 40, so that the protective member is less prone to deformation or cracking when subjected to the action force of the terminal body 31, thereby reducing the risk of failure of the protective member 50 and improving the reliability of the battery cell 7.

In some embodiments, the tensile strength of the protective member 50 is greater than the tensile strength of the electrode terminal 30. The protective member 50 can restrain the terminal body 31 and reduce the deformation of the terminal body 31.

In some embodiments, the tensile strength of the protective member 50 is greater than or equal to 40 MPa. Optionally, the tensile strength of the protective member 50 is 40 MPa, 50 MPa, 80 MPa, 100 MPa, 150 MPa, 200 MPa, 300 MPa, 500 MPa, 600 MPa, 800 MPa, or 1000 MPa.

In some embodiments, the elastic modulus of the protective member 50 is 50 GPa-500 GPa to reduce the deformation of the protective member 50 when being squeezed by the terminal body 31. Optionally,
In some embodiments, the material of the protective member 50 comprises metal or ceramic. The metal and ceramic have higher tensile strengths, which can improve the reliability of the protective member 50 and reduce the risk of cracking of the protective member 50.

In some embodiments, optionally, the material of the protective member 50 is aluminum or stainless steel. By way of example, the protective member 50 is an aluminum ring or a stainless steel ring.

In some embodiments, the material of the protective member 50 comprises insulating ceramic, which can improve the insulation between the electrode terminal 30 and the wall portion 23 and reduce the risk of short circuit.

In some embodiments, at least a portion of the insulating member 40 is located between the fixing portion 32 and the wall portion 23, so that the insulating member 40 is fixed to the wall portion 23. By way of example, the fixing portion 32 may press the insulating member 40 against the wall portion 23 to fix the insulating member 40.

In some embodiments, the insulating member 40 isolates the protective member 50 from the wall portion 23. When the protective member 50 is made of a conductive material, the insulating member 40 can isolate, in an insulated manner, the wall portion 23 from the protective member 50 to reduce the risk of the electrode terminal 30 being in electrical conduction with the wall portion 23 by means of the protective member 50, thus improving reliability.

In some embodiments, the shell 20 comprises a shell body 21 and an end cover 22. The shell body 21 has an opening, and the end cover 22 covers the opening. The shell body 21 comprises a bottom wall 211 arranged opposite to the end cover 22.

The wall portion 23 may be either a bottom wall 211 or an end cover 22.

In some embodiments, the wall portion 23 is the bottom wall 211. By way of example, one of the bottom wall 211 and the electrode terminal 30 can serve as a positive output electrode of the battery cell 7, and the other can serve as a negative output electrode of the battery cell 7. The electrode terminal 30 is arranged on the bottom wall 211, so that the positive and negative output electrodes of the battery cell 7 are lead out from the same side.

In some embodiments, the protective member 50 is provided with a first through hole 51. The insulating member 40 is provided with a second through hole 41. The terminal body 31 passes through the first through hole 51, the second through hole 41, and the electrode lead-out hole 231.

The first through hole 51, the second through hole 41, and the electrode lead-out hole 231 may or may not be coaxially arranged or non-coaxially arranged.

Along the radial direction of the electrode lead-out hole 231, the protective member 50 may or may not protrude inward from the hole wall of the second through hole 41.

Along the radial direction of the electrode lead-out hole 231, the protective member 50 may or may not protrude inward from the hole wall of the electrode lead-out hole 231.

The protective member 50 may or may not be in contact with the terminal body 31.

By providing the first through hole 51 and the second through hole 41, it is convenient for the terminal body 31 to pass through the protective member 50 and the insulating member 40.

In some embodiments, along the radial direction of the electrode lead-out hole 231, a portion of the protective member 50 protrudes inward from a hole wall of the second through hole 41.

The portion of the protective member 50 protrudes inward from the hole wall of the second through hole 41, so that the deformation or movement of the terminal body 31 can be limited, thus reducing the risk of the terminal body 31 directly squeezing the hole wall of the second through hole 41, reducing the stretching of the insulating member 40 in the radial direction of the electrode lead-out hole 231, and reducing the risk of cracking of the insulating member 40, thus improving the reliability of the battery cell 7.

In some embodiments, along the radial direction of the electrode lead-out hole 231, a portion of the protective member 50 protrudes inward from the hole wall of the electrode lead-out hole 231.

The portion of the protective member 50 that protrudes inward from the hole wall of the electrode lead-out hole 231 can limit the deformation or movement of the terminal body 31, thereby reducing the risk of the terminal body 31 squeezing the wall portion 23 and reducing the short-circuit risk to a certain extent, thus improving the reliability of the battery cell 7.

In some embodiments, the first through hole 51, the second through hole 41, and the electrode lead-out hole 231 are coaxially arranged.

By way of example, the coaxial arrangement may mean that the axis of the first through hole 51, the axis of the second through hole 41, and the axis of the electrode lead-out hole 231 coincide with each other. Optionally, the axis of the first through hole 51, the axis of the second through hole 41, and the axis of the electrode lead-out hole 231 are all parallel to the thickness direction Z.

It can be understood that "coaxial" encompasses not only an absolutely coaxial case but also a substantially coaxial case conventionally recognized in engineering.

The first through hole 51, the second through hole 41, and the electrode lead-out hole 231 are coaxially arranged, so that the terminal body 31 can pass through the first through hole 51, the second through hole 41, and the electrode lead-out hole 231 at the same time, simplifying the structural requirements for the terminal body 31 and reducing the difficulty of assembly.

In some embodiments, the aperture of the electrode lead-out hole 231 is greater than or equal to the aperture of the second through hole 41. Optionally, the aperture of the electrode lead-out hole 231 is greater than the aperture of the second through hole 41.

In some embodiments, the aperture of the second through hole 41 is greater than or equal to the aperture of the first through hole 51. Optionally, the aperture of the second through hole 41 is greater than the aperture of the first through hole 51.

In some embodiments, at least a portion of the hole wall of the first through hole 51 abuts against the periphery of the terminal body 31.

When the battery cell 7 is subjected to external impact, the shaking of the terminal body 31 along the radial direction of the electrode lead-out hole 231 is reduced. The hole wall of the first through hole 51 directly abuts against the periphery of the terminal body 31, so that the deformation of the terminal body 31 can be effectively limited.

In some embodiments, the portion of the protective member 50 that protrudes from the hole wall of the second through hole 41 is in a ring shape. The protective member 50 can limit the terminal body 31 integrally from the periphery, thus further reducing the risk of the terminal body 31 directly squeezing the hole wall of the second through hole 41, reducing the stretching of the insulating member 40 in the radial direction of the electrode lead-out hole 231, and reducing the risk of cracking of the insulating member 40, thus improving the reliability of the battery cell 7.

In some embodiments, in the thickness direction Z of the wall portion 23, the fixing portion 32 at least partially overlaps with the wall portion 23, and at least a portion of the insulating member 40 and at least a portion of the protective member 50 are located between the wall portion 23 and the fixing portion 32.

The fixing portion 32 and the wall portion 23 can clamp the insulating member 40 and the protective member 50 in the thickness direction Z, thus improving the stability of the insulating member 40 and the protective member 50. When the battery cell 7 is subjected to external impact, the movement of the insulating member 40 relative to the wall portion 23 and the movement of the protective member 50 relative to the wall portion 23 are reduced, thus improving reliability.

In some embodiments, the fixing portion 32 is in a ring shape.

In some embodiments, a width W of a projection of the fixing portion 32 on the insulating member 40 along the thickness direction Z is greater than or equal to 0.5 mm, so that the fixing portion 32 can effectively press the insulating member 40 against the wall portion 23, thereby reducing the risk of the insulating member 40 being offset along the electrode lead-out hole 231, thus improving reliability.

In some embodiments, the width W of the projection of the fixing portion 32 on the insulating member 40 along the thickness direction Z is greater than or equal to 0.5 mm-5 mm.

By way of example, the projection of the fixing portion 32 on the insulating member 40 along the thickness direction Z may be in a ring shape, and W may be the ring width of the projection in a ring shape. The minimum ring width of the projection in a ring shape is greater than or equal to 0.5 mm.

In some embodiments, the protective member 50 comprises a first portion 52 and a second portion 53 connected to the first portion 52, the first portion 52 is configured to overlap with the insulating member 40 along the thickness direction Z, and along the radial direction of the electrode lead-out hole 231, the second portion 53 protrudes inward from the hole wall of the second through hole 41.

The first portion 52 being configured to overlap with the insulating member 40 along the thickness direction Z may mean that the projection of the first portion 52 along the thickness direction Z is located within the projection of the insulating member 40 along the thickness direction Z.

The first portion 52 is configured to overlap with the insulating member 40 in the thickness direction Z, so that the wall portion 23 and the fixing portion 32 clamp the insulating member 40 and the first portion 52 in the thickness direction Z at the same time. The second portion 53 can limit the deformation or movement of the terminal body 31, thus reducing the risk of the terminal body 31 directly squeezing the hole wall of the second through hole 41, reducing the stretching of the insulating member 40 in the radial direction of the electrode lead-out hole 231, and reducing the risk of cracking of the insulating member 40, thus improving the reliability of the battery cell 7.

In some embodiments, the second portion 53 can be in a ring shape. By way of, the second portion 53 is in a circular ring shape or a square ring shape.

In some embodiments, the second portion 53 is a circular ring. It can be understood that an inner circle and an outer circle of the circular ring can be either concentric or non-concentric.

In some embodiments, the ring width of the second portion 53 is 0.1 mm-0.8 mm. In an embodiment of the present application, the ring width of the second portion 53 is defined as being greater than or equal to 0.1 mm, which can increase the distance between the hole wall of the second through hole 41 and the terminal body 31 and reduce the risk of the terminal body 31 squeezing the insulating member 40. In an embodiment of the present application, the ring width of the second portion 53 is defined as being less than or equal to 0.8 mm, which reduces the loss of the diameter of the terminal body 31 and improves the current carrying capacity of the terminal body 31.

In some embodiments, in the thickness direction Z, the projection of the second through hole 41 is located within the projection of the electrode lead-out hole 231, so that the second portion 53 protrudes inward from the hole wall of the electrode lead-out hole 231, thereby reducing the risk of the terminal body 31 squeezing the wall portion 23 and reducing the deformation of the wall portion 23, thus improving the reliability of the battery cell 7.

In some embodiments, along the thickness direction Z, at least a portion of the first portion 52 is located between the fixing portion 32 and the insulating member 40.

The fixing portion 32 can squeeze the insulating member 40 via the protective member 50, and the protective member 50 can play a protective effect, thereby reducing the risk of the fixing portion 32 causing pressure-induced damage to the insulating member 40, thus improving reliability.

In some embodiments, the protective member 50 has a first surface and a second surface which are arranged opposite along the thickness direction Z. The first surface is attached to the fixing portion 32, and the second surface is attached to the insulating member 40.

In some embodiments, the fixing portion 32 is not in direct contact with the insulating member 40.

In some embodiments, the protective member 50 may be either movably placed on the insulating member 40 or fixedly connected to the insulating member 40.

In some embodiments, the protective member 50 can be movably placed on the insulating member 40. The protective member 50 is pressed tightly against the insulating member 40 under the action of the fixing portion 32. There is no direct connection between the contact surfaces of the protective member 50 and the insulating member 40. Thus, when the protective member 50 is subjected to a radial action force along the electrode lead-out member, the protective member 50 can move relative to the insulating member 40, thereby reducing the action force applied by the protective member 50 to the insulating member 40 and reducing the risk of cracking and failure of the insulating member 40.

In some embodiments, the protective member 50 is fixedly connected to the insulating member 40. For example, even without the action of the fixing portion 32, the protective member 50 and the insulating member 40 can also be fixedly connected.

During the assembly of the battery cell 7, the protective member 50 and the insulating member 40 can be supplied simultaneously, thereby omitting the positioning and installation process of the protective member 50, simplifying the assembly process and reducing costs.

In some embodiments, the protective member 50 is fixedly connected to the insulating member 40 by bonding, hot pressing lamination, integral injection molding, or other means.

In some embodiments, the insulating member 40 comprises an insulating body 42 and an insulating protrusion 43, the second through hole 41 penetrates the insulating body 42 along the thickness direction Z, at least a portion of the insulating body 42 is located between the fixing portion 32 and the wall portion 23, and the insulating protrusion 43 protrudes from a surface of the insulating body 42 away from the wall portion 23. At least a portion of the protective member 50 is located between the fixing portion 32 and the insulating body 42 in the thickness direction Z and between the insulating protrusion 43 and the terminal body 31 in the radial direction of the second through hole 41.

There may be either one or more insulating protrusions 43. In some examples, there is one insulating protrusion 43 that surrounds the outer side of the protective member 50. In some other examples, there are a plurality of insulating protrusions 43, and the plurality of insulating protrusions 43 are arranged at intervals along the circumference of the protective member 50.

During the assembly of the protective member 50, the insulating protrusion 43 can limit the position of the protective member 50, thus simplifying the installation process of the protective member 50. During the production or use of the battery cell 7, the insulating protrusion 43 can restrict the position of the protective member 50, thereby reducing the amount of offset of the protective member 50, thus improving the reliability of the protective member 50.

In some embodiments, the aperture of the second through hole 41 is D1, the diameter of the first through hole 51 is D2, and the outer diameter of the protective member 50 is D3; the insulating protrusion 43 is in a ring shape, and the inner diameter of the insulating protrusion 43 is D4. D1, D2, D3, and D4 satisfy: D1-D2 > D4-D3.

D4-D3 is related to the amount of offset of the protective member 50 in the radial direction, and the size of protrusion of the protective member 50 inward from the hole wall of the second through hole 41 in the radial direction is related to the value of D1-D2. In an embodiment of the present application, D4-D3 is defined as being smaller than D1-D2. Even if deviation occurs during the assembly of the protective member 50, it can still be ensured to a certain extent that the protective member 50 protrudes inward from the hole wall of the second through hole 41 in the radial direction, thereby enabling the protective member 50 to limit the deformation degree and movement range of the terminal body 31 in its own radial direction, reducing the risk of cracking of the insulating member 40, thus improving the reliability of the battery cell 7.

In some embodiments, the insulating protrusion 43 and the insulating body 42 define a first recess 44, and the protective member 50 is accommodated in the first recess 44.

In some embodiments, at least a portion of the fixing portion 32 is accommodated in the first recess 44.

In some embodiments, in the radial direction of the electrode lead-out hole 231, the fixing portion 32 and the insulating protrusion 43 are spaced apart from each other to reduce the risk of the fixing portion 32 directly squeezing the insulating protrusion 43.

In some embodiments, a portion of the insulating body 42 extends into the electrode lead-out hole 231 to isolate, in an insulated manner, at least a portion of the hole wall of the electrode lead-out hole 231 from the terminal body 31.

In some embodiments, the electrode terminal 30 further comprises a position-limiting portion 33 arranged surrounding the terminal body 31, and in the thickness direction Z of the wall portion 23, the position-limiting portion 33 and the fixing portion 32 are located on two sides of the wall portion 23, respectively.

By way of example, in the thickness direction Z, at least a portion of the wall portion 23 is located between the position-limiting portion 33 and the fixing portion 32.

The position-limiting portion 33 and the fixing portion 32 can clamp the wall portion 23 from the two sides, thereby achieving fixation of the electrode terminal 30 and the wall portion 23.

In some embodiments, the position-limiting portion 33 is in a ring shape.

In some embodiments, the battery cell 7 further comprises a sealing member 60, and at least a portion of the sealing member 60 is clamped between the position-limiting portion 33 and the wall portion 23 to seal the electrode lead-out hole 231.

In some embodiments, the material of the sealing member 60 comprises a rubber or a plastic.

In some embodiments, in the radial direction of the electrode lead-out hole 231, the size of the portion of the position-limiting portion 33 that protrudes outward from the terminal body 31 is greater than the size of the portion of the fixing portion 32 that protrudes outward from the terminal body 31. The position-limiting portion 33 has a larger size, which can better compress the sealing member 60 and improve the sealing performance.

In some embodiments, the fixing portion 32 is located on the outer side of the wall portion 23.

In some embodiments, a second recess 311 is arranged on the outer side of the terminal body 31, and a third through hole 312 for injecting an electrolyte is arranged at the bottom of the second recess 311.

In some embodiments, the battery cell 7 further comprises a sealing plate 70, and at least a portion of the sealing plate 70 is accommodated in the second recess 311 and used for sealing the third through hole 312.

In some embodiments, a side wall of the second recess 311 is provided with a stepped surface, and the sealing plate 70 abuts against the stepped surface and is welded to the terminal body 31.

In some embodiments, the battery cell 7 is a cylindrical battery cell.

FIG. 11 is a schematic structural view of a battery cell provided by some embodiments of the present application before the fixing portion is formed.

As shown in FIGs. 7, 8, and 11, in some embodiments, the fixing portion 32 is configured to be formed by folding after the electrode terminal 30 passes through the electrode lead-out hole 231.

By way of example, during assembly, the electrode terminal 30 passes through the electrode lead-out hole 231, the second through hole 41, and the first through hole 51 in advance, and then, a portion of the electrode terminal 30 is folded to form the fixing portion 32, so that the electrode terminal 30 is riveted on the wall portion 23.

When folding the electrode terminal 30, the material flows toward the folded portion, causing the periphery of the electrode terminal 30 to expand; the protective member 50 can limit the flow of material during the formation of the fixing portion 32, thereby reducing the radial expansion of the electrode terminal 30 and reducing the risk of compression cracking of the insulating member 40 during the shaping of the fixing portion 32, thus improving the reliability of the battery cell 7.

In some embodiments, the electrode terminal 30 has a third recess 34 before being mounted on the wall portion 23, and a side wall of the third recess 34 is foled to form the fixing portion 32. After the fixing portion 32 is formed, the remaining portion of the third recess 34 forms a second recess 311.

In some embodiments, the fixing portion 32 is located on the outer side of the wall portion 23. Folding the electrode terminal 30 from the outer side can reduce the difficulty of the formation of the electrode terminal 30 and simplify the process.

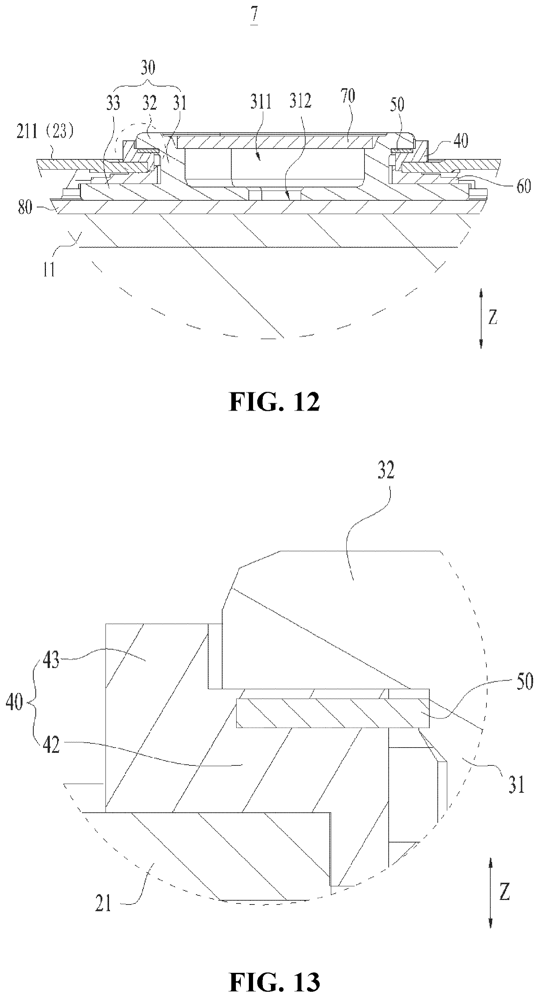

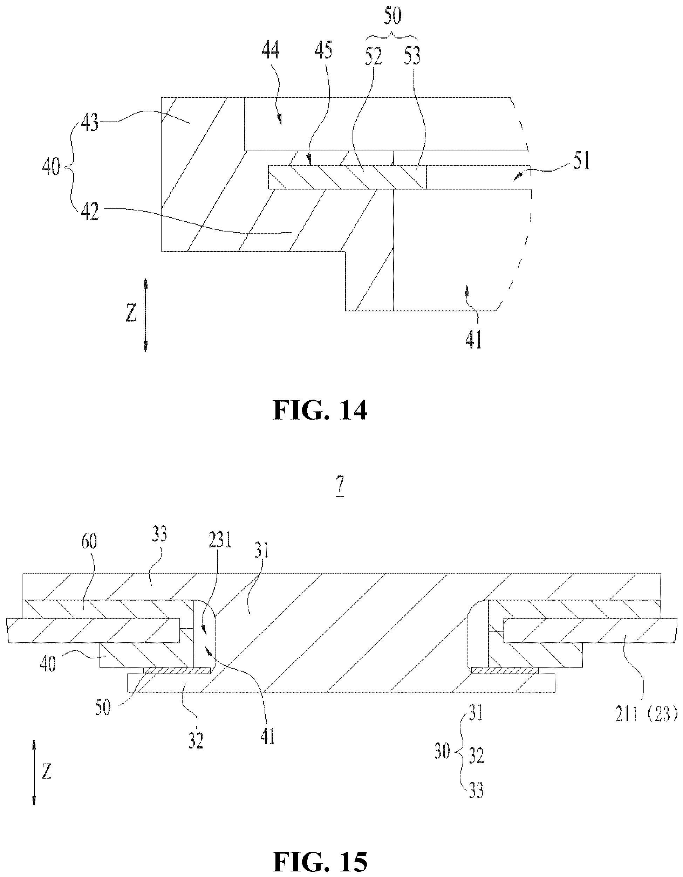

FIG. 12 is a schematic local sectional view of a battery cell provided by some other embodiments of the present application; FIG. 13 is an enlarged schematic view of a round frame in FIG. 12; and FIG. 14 is a schematic view of an insulating member and a protective member of a battery cell as provided by some embodiments of the present application.

Referring to FIGs. 12 to 14, in some embodiments, the first portion 52 is embedded into the insulating member 40.

Embedding the first portion 52 into the insulating member 40 can maintain the relative positions of the insulating member 40 and the protective member 50 fixed during the assembly of the battery cell 7, so that the protective member 50 can better limit the deformation of the electrode terminal 30 during the assembly process, thereby better protecting the insulating member 40 and reducing the risk of cracking of the insulating member 40.

In some embodiments, the insulating member 40 is provided with a fourth recess 45. The fourth recess 45 is recessed from the hole wall of the second through hole 41; and the first portion 52 is inserted into the fourth recess 45.

In some embodiments, the protective member 50 and the insulating member 40 are formed by integral injection molding. The integral injection molding method can improve the fixing strength of the insulating member 40 and the protective member 50.

In some embodiments, in the thickness direction Z, a minimum distance between the protective member 50 and the fixing portion 32 is greater than a minimum distance between the protective member 50 and the wall portion 23. During the formation of the fixing portion 32, material accumulation is more likely to occur at the connection between the fixing portion 32 and the terminal body 31. The protective member 50 is closer to the fixing portion 32, thereby effectively limiting the deformation of the terminal body 31 and reducing the risk of the terminal body 31 squeezing the insulating member 40.

In some embodiments, the fourth recess 45 is arranged in the insulating body 42.

FIG. 15 is a schematic local sectional view of a battery cell provided by some other embodiments of the present application.

As shown in FIG. 15, in some embodiments, the bottom wall 211 of the shell body 21 is the wall portion 23, and the fixing portion 32 is located on the inner side of the wall portion 23.

By way of example, during the assembly of the electrode terminal 30, the electrode terminal 30 can be inserted from the outer side of the wall portion 23 into the electrode lead-out hole 231 and through the first through hole 51 and the second through hole 41, and then, an external device is extended into the shell body 21 to fold the electrode terminal 30, thus forming the fixing portion 32.

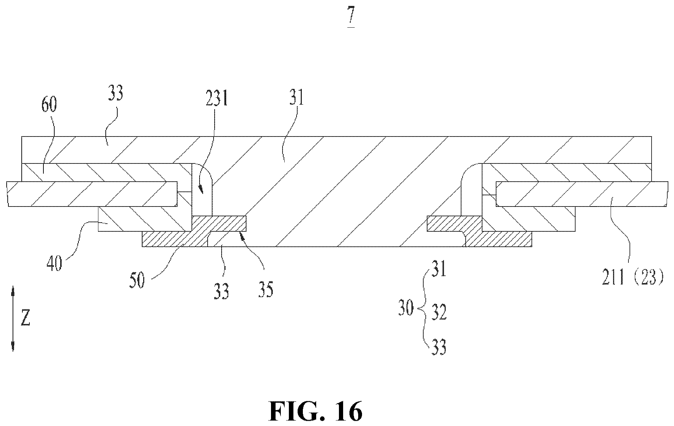

FIG. 16 is a schematic local sectional view of a battery cell provided by some other embodiments of the present application.

As shown in FIG. 16, in some embodiments, the electrode terminal 30 is fixed to the wall portion 23 via the protective member 50.

In some embodiments, the electrode terminal 30 is fixed to the protective member 50.

In some embodiments, the periphery of the electrode terminal 30 is provided with a fifth recess 35, and the fixing portion 32 is located on one side of the fifth recess 35 and is used for defining the fifth recess 35 with the terminal body 31.

A portion of the protective member 50 is inserted into the fifth recess 35 so that the protective member 50 is fixed to the electrode terminal 30.

In some embodiments, along the thickness direction Z, the projection of the fixing portion 32 is located within the projection of the electrode lead-out hole 231.

In some embodiments, along the thickness direction Z, the projection of the fixing portion 32 is located within the projection of the second through hole 41.

In some embodiments, the fixing portion 32 is configured to be formed by folding after the electrode terminal 30 passes through the electrode lead-out hole 231 and the first through hole 51.

During the formation of the fixing portion 32 by folding, the electrode terminal 30 is restricted by a position-limiting member, thereby reducing the risk of the electrode terminal 30 squeezing the insulating member 40.

In some embodiments, in the thickness direction Z, at least a portion of the insulating member 40 is located between the wall portion 23 and the protective member 50.

In some embodiments, in the thickness direction Z, a portion of the wall portion 23 is located between the position-limiting portion 33 and the protective member 50, so that the electrode terminal 30 and the protective member 50 are fixed to the wall portion 23.

In some embodiments, in the radial direction of the electrode lead-out hole 231, a portion of the protective member 50 is located between the terminal body 31 and the insulating member 40. The protective member 50 can isolate the terminal body 31 from the insulating member 40 to reduce the risk of the terminal body 31 directly squeezing and stretching the insulating member 40.

According to some embodiments of the present application, the present application further provides a battery comprising a plurality of battery cells provided by any one of the above embodiments.

According to some embodiments of the present application, the present application further provides an electrical apparatus comprising the battery cell of any one of the above embodiments. The battery cell is used for providing electric energy for the electrical apparatus. The electrical apparatus can be any one of the above devices or systems in which a battery cell is used.

With reference to FIGs. 4 to 10, an embodiment of the present application provides a battery cell 7 comprising an electrode assembly 10, a shell 20, an electrode terminal 30, an insulating member 40, and a protective member 50.

The shell 20 comprises a shell body 21 and an end cover 22. The shell body 21 has an opening, and the end cover 22 is used for covering the opening. The shell 20 comprises a bottom wall 211 opposite to the end cover 22. The bottom wall 211 is provided with an electrode lead-out hole 231.

The electrode assembly 10 is accommodated in the shell 20. An end of the electrode assembly 10 that faces the bottom wall 211 is provided with a tab 11.

The protective member 50 is provided with a first through hole 51, and the insulating member 40 is provided with a second through hole 41. The electrode terminal 30 comprises a terminal body 31, a fixing portion 32, and a position-limiting portion 33. The terminal body 31 passes through the first through hole 51, the second through hole 41, and the electrode lead-out hole 231. The position-limiting portion 33 is located on the inner side of the bottom wall 211 and surrounds the terminal body 31. The fixing portion 32 is located on the outer side of the bottom wall 211 and surrounds the terminal body 31.

In some embodiments, the insulating member 40 comprises an insulating body 42 and an insulating protrusion 43. The second through hole 41 penetrates the insulating body 42 along the thickness direction Z of the bottom wall 211. At least a portion of the insulating body 42 is located between the fixing portion 32 and the bottom wall 211. The insulating protrusion 43 protrudes from a surface of the insulating body 42 away from the bottom wall 211.

The protective member 50 comprises a first portion 52 and a second portion 53. The projection of the first portion 52 along the thickness direction Z is located within the projection of the insulating body 42 along the thickness direction Z, and the first portion 52 is clamped between the insulating body 42 and the fixing portion 32. The second portion 53 is connected to the first portion 52, and along the radial direction of the electrode lead-out hole 231, the second portion 53 protrudes inward from the hole wall of the second through hole 41. The second portion 53 defines a first through hole 51.

The tensile strength of the protective member 50 is greater than the tensile strength of the insulating member 40. The fixing portion 32 is configured to be formed by folding after the electrode terminal 30 passes through the electrode lead-out hole 231.

It needs to be noted that without conflict, the embodiments in the present application and the features in the embodiments may be combined with each other.

Finally, it needs to be noted that the above embodiments are merely used for describing the technical solution of the present application, rather than limiting the present application. Although the present application has been described in detail with reference to the foregoing embodiments, those of ordinary skill in the art should understand that they can still make modifications to the technical solution disclosed in each of the above embodiments or perform equivalent replacement on some of the technical features thereof. However, these modifications or replacements are not intended to make the essences of the corresponding technical solutions depart from the spirit and scope of the technical solutions of the embodiments of the present application.

## Claims

1. A battery cell, comprising:
a shell comprising a wall portion provided with an electrode lead-out hole;
an electrode assembly accommodated in the shell and comprising a tab;
an electrode terminal electrically connected to the tab, wherein the electrode terminal comprises a terminal body passing through the electrode lead-out hole and a fixing portion connected to the terminal body;
an insulating member arranged surrounding the terminal body, wherein at least a portion of the insulating member is located between the fixing portion and the wall portion to isolate, in an insulated manner, the fixing portion from the wall portion; and
a protective member arranged surrounding the terminal body and in contact with the insulating member, wherein a tensile strength of the protective member is greater than a tensile strength of the insulating member.

2. The battery cell according to claim 1, wherein the tensile strength of the protective member is greater than a tensile strength of the electrode terminal.

3. The battery cell according to claim 1 or 2, wherein the material of the protective member comprises metal or ceramic.

4. The battery cell according to any one of claims 1 to 3, wherein the protective member is provided with a first through hole, the insulating member is provided with a second through hole, and the terminal body passes through the first through hole, the second through hole, and the electrode lead-out hole.

5. The battery cell according to claim 4, wherein along a radial direction of the electrode lead-out hole, a portion of the protective member protrudes inward from a hole wall of the second through hole and/or from a hole wall of the electrode lead-out hole.

6. The battery cell according to claim 4, wherein the first through hole, the second through hole, and the electrode lead-out hole are coaxially arranged.

7. The battery cell according to claim 4, wherein at least a portion of a hole wall of the first through hole abuts against a periphery of the terminal body.

8. The battery cell according to claims 4 to 6, wherein the portion of the protective member that protrudes from the hole wall of the second through hole is in a ring shape.

9. The battery cell according to any one of claims 4 to 8, wherein in a thickness direction of the wall portion, the fixing portion at least partially overlaps with the wall portion, and at least a portion of the insulating member and at least a portion of the protective member are located between the wall portion and the fixing portion.

10. The battery cell according to claim 9, wherein a width of a projection of the fixing portion on the insulating member along the thickness direction is greater than or equal to 0.5 mm.

11. The battery cell according to claim 9 or 10, wherein the protective member comprises a first portion and a second portion connected to the first portion, the first portion is configured to overlap with the insulating member along the thickness direction, and along the radial direction of the electrode lead-out hole, the second portion protrudes inward from the hole wall of the second through hole.

12. The battery cell according to claim 11, wherein
in the thickness direction, a projection of the second through hole is located within a projection of the electrode lead-out hole.

13. The battery cell according to claim 11 or 12, wherein the first portion is embedded into the insulating member.

14. The battery cell according to claim 11 or 12, wherein along the thickness direction, at least a portion of the first portion is located between the fixing portion and the insulating member.

15. The battery cell according to claim 9, wherein the insulating member comprises an insulating body and an insulating protrusion, the second through hole penetrates the insulating body along the thickness direction, at least a portion of the insulating body is located between the fixing portion and the wall portion, and the insulating protrusion protrudes from a surface of the insulating body away from the wall portion; and
at least a portion of the protective member is located between the fixing portion and the insulating body in the thickness direction and between the insulating protrusion and the terminal body in the radial direction of the second through hole.

16. The battery cell according to claim 15, wherein the aperture of the second through hole is D1, the diameter of the first through hole is D2, and the outer diameter of the protective member is D3; the insulating protrusion is in a ring shape, and the inner diameter of the insulating protrusion is D4; and
D1, D2, D3, and D4 satisfy: D1-D2 > D4-D3.

17. The battery cell according to any one of claims 1 to 16, wherein the electrode terminal further comprises a position-limiting portion arranged surrounding the terminal body, and in the thickness direction of the wall portion, the position-limiting portion and the fixing portion are located on two sides of the wall portion, respectively.

18. The battery cell according to any one of claims 1 to 17, wherein the fixing portion is located on an inner side of the wall portion; or
the fixing portion is located on an outer side of the wall portion.

19. The battery cell according to any one of claims 1 to 18, wherein the fixing portion is configured to be formed by folding after the electrode terminal passes through the electrode lead-out hole.

20. The battery cell according to any one of claims 1 to 19, wherein the protective member is fixedly connected to the insulating member.

21. The battery cell according to claim 20, wherein the protective member and the insulating member are formed by integral injection molding.

22. The battery cell according to any one of claims 1 to 21, wherein the shell comprises a shell body and an end cover, the shell body has an opening, and the end cover covers the opening; and
the shell body comprises a bottom wall arranged opposite to the end cover, and the wall portion is the bottom wall.

23. A battery, comprising a plurality of battery cells according to any one of claims 1 to 22.

24. An electrical apparatus, comprising the battery according to claim 23, the battery being used for providing electric energy.
